# EUROPEAN PATENT APPLICATION

(11) **EP 0 893 751 A1**
(43) Date of publication of application: **27.01.1999**
(21) Application number: 97202854.2
(22) Date of filing: 16.09.1997
(51) Int. Cl.: G06F 1/00

(54) **Integrated circuit and method for secure data processing by means of this integrated circuit**

(30) Priority: 18.07.1997 EP 97202254
(71) Applicant: IRDETO B.V., 2132 HD Hoofddorp (NL)
(72) Inventor: Rix, Simon Paul Ashley, Randburg 2125 (ZA)
(74) Representative: de Vries, Johannes Hendrik Fokke

(57) **Abstract**

An integrated circuit comprises logic circuitry, such as a microprocessor, and a secure co-processor protected by a cocoon. The co-processor is connected to the logic circuitry at least by data lines. The co-processor comprises a cryptographic engine and a volatile storage element for storing a secret key.

## Description

The present invention relates to an integrated circuit and to a method for secure data processing using a secret key by means of this integrated circuit.

In the areas of pay television, banking, or any other environment of secure data processing, the system or method used relies on the secure storage of a secret piece of information, i.e. a secret key. This secret key is used by a microprocessor for carrying out cryptographic functions. In the integrated circuits comprising a microprocessor and storage element for the secret key, security is obtained by making the entire microprocessor and storage element secure by encapsulating the complete circuitry in a cocoon, labyrinth or encapsulation which may comprise power, ground and/or sense wires. However encapsulating the complete circuitry is rather complex in view of the area size of the circuitry in the integrated circuit chip. Further, there are several connections between the microprocessor and peripheral circuitry, each of these connections being a possible point of attack for unauthorized persons to obtain information which can be used in finding the secret key. Moreover, if the operation of the microprocessor is stopped during a cryptographic operation, the registers of the microprocessor contain information which can be used by unauthorized persons to derive the secret key. It will be clear that as soon as the secret key has been found by unauthorized persons, the security of the system has been broken.

The invention aims to provide an integrated circuit and method of the above-mentioned type with enhanced security.

According to the invention an integrated circuit is provided, comprising logic circuitry, preferably a microprocessor, and a secure co-processor protected by a cocoon, said co-processor being connected to said logic circuitry at least by data lines, wherein said co-processor comprises a cryptographic engine and a volatile storage element for storing a secret key.

In this manner an integrated circuit is provided wherein only a small part of the circuitry, i.e. the secure co-processor or secure cell, needs to be encapsulated in a cocoon, which in view of the small size of the co-processor area is possible in a relatively easy manner with high security. All storage and cryptographic functions are contained within the cocoon, so that no part of any cryptographic process is visible to any external means at any stage of its operation. Only messages from the microprocessor to be processed by the secure co-processor and processed messages are available on the data lines, which information however provides no information at all regarding the secret key. In this manner it is impossible for any third party to find any information on the secret key in an attempt to break the security.

As the secret key is stored in a volatile storage element, any attempt to access the secure co-processor will result in a loss of the secret key as such an attempt will be detected by the cocoon resulting in a loss of power and thereby in erasure of the secret key.

According to the invention a method for secure dataprocessing is provided using a secret key, comprising the steps of loading the secret key in the storage element, sending encrypted information from the microprocessor to the co-processor via the data lines together with control information, using the secret key to decrypt said information in accordance with the control information in the co-processor, authenticating the decrypted information, and using the decrypted information in accordance with the control information.

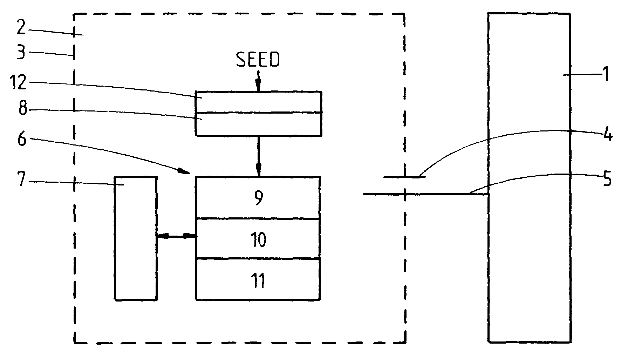

The invention will be further explained by reference to the drawing in which an embodiment of the integrated circuit according to the invention is shown in a very schematical manner.

By way of example it will be assumed that the integrated circuit shown is part of a smart card used in the conditional access module of a decoder system for pay television. However, the invention is certainly not restricted to such an application. On the contrary, the invention can be used in a wide area of cryptographic applications.

The integrated circuit comprises a microprocessor 1 and a secure co-processor 2 encapsulated in a cocoon 3 of security wires which may include power, ground and/or sense wires. The security wires 3 are indicated by a dashed line surrounding the co-processor 2. In the actual integrated circuit the co-processor 2 will be covered substantially completely by the security wires at least at the top and bottom sides. It is observed that the term cocoon as used in this specification can be a labyrinth, cover or encapsulation of power, ground and/or sense wires or another active or passive means preventing access to the co-processor 2.

The co-processor 2 is connected to other circuitry of the integrated circuit, in particular to a clock circuit not shown and to the microprocessor 1 by clock and data lines 4, 5. The co-processor 2 comprises a cryptographic unit 6, a control unit 7 and a volatile storage element 8 for storing a secret key. The cryptographic unit 6 comprises a decryption engine 9, an authentication engine 10 and preferably also an encryption engine 11. Further, the cryptographic unit 6 includes a one-way function block 12 to load the secret key into the storage element 8. Power consumption of the elements of the secure co-processor 2 is very low and power is provided by a battery not shown.

The storage element 8 for the secret key and all cryptographic functions are contained within the cocoon 3, so that no part of any cryptographic process is accessible to any external means at any stage of operation of the coprocessor 2. The actual decryption, encryption and/or authentication functions are no part of the present invention and therefore a detailed description of such functions is not necessary. Any decryption, encryption or authentication normally used in cryptographic processes can be implemented in the logic circuitry of the co-processor 2. It is noted, however, that the number of logic elements used for the co-processor 2 is preferably as small as possible as this will result in a small cocoon with very high security.

Any attempt to enter the cocoon 3 will result in a contact with any of the sense wires or a short circuiting of ground and power wires so that the power of the co-processor 2 will be disconnected. Such an attempt would therefore lead to an erasure of the secret key stored in the storage element 8.

Using the integrated circuit described, data-processing is possible in a very secure manner by first loading a secret key in the storage element 8 by sending a seed through the one-way function block 12 to the storage element. As the secret key is loaded through the datalines 5 to the secure co-processor using the one-way function, for example a one-way hash function, the smart card cannot be re-used even if a secret key has been determined by unauthorized persons, as the one-way function is unknown.

After loading the secret key in the storage element 8, the microprocessor 1 can reguest the co-processor 2 to decrypt encrypted information forwarded via the datalines 5 to the co-processor 2 together with control information to indicate the requested operation to the control unit 7, and an authentication vector. The co-processor 2 uses the secret key to decrypt the information and the decrypted information is authenticated in a usual manner. The decrypted information is thereafter used by the co-processor 2 in accordance with the control information and this control information can either indicate that the decrypted information should be returned to the microprocessor 1 or should for example be used as a key for a next decryption step on a next encrypted information message from the microprocessor 1. In this latter case a chain of two or more decryption steps can be performed within the co-processor 2 without returning decrypted information to the microprocessor 1.

The control information in the messages provided by the microprocessor can contain information as to which decryption or encryption algorithm is to be used by the co-processor 2 and any other required configuration information.

It is noted that although the co-processor 2 is shown as comprising a number of separate blocks the actual implementation of this co-procesor can be made in any suitable manner.

The invention is not restricted to the above-described embodiment which can be varied in a number of ways within the scope of the claims.

## Claims

1. Integrated circuit, comprising logic circuitry, preferably a microprocessor, and a secure co-processor protected by a cocoon, said co-processor being connected to said logic circuitry at least by data lines, wherein said co-processor comprises a cryptographic engine and a volatile storage element for storing a secret key.

2. Integrated circuit according to claim 1, wherein said secure co-processor comprises a one-way function unit, wherein a secret key is loaded in said storage element by providing a seed to said one-way function unit.

3. Integrated circuit according to claim 1 or 2, wherein the cryptographic engine comprises a control unit, a decryption engine and an authentication engine.

4. Integrated circuit according to claim 3, wherein the cryptographic engine further comprises an encryption engine.

5. Integrated circuit according to anyone of the preceding claims, wherein said cocoon comprises security wires, preferably including power, ground and/or sense wires.

6. Integrated circuit according to anyone of the preceding claims, wherein at least the volatile storage element for the secret key is powered by a battery.

7. Method for secure data processing using a secret key by using an integrated circuit according to anyone of the preceding claims, comprising the steps of
- loading a secret key in the storage element,
- sending encrypted information from the microprocessor to the co-processor via the data lines together with control information,
- using the secret key to decrypt said information in accordance with the control information in the co-processor,
- authenticating the decrypted information, and
- using the decrypted information in accordance with the control information.

8. Method according to claim 7, wherein the decrypted information is used as decryption key in the co-processor to decrypt further encrypted information received from the microprocessor.

9. Method according to claim 7 or 8, wherein the decrypted information is returned to the microprocessor.

10. Method accoding to claim 7, 8 or 9, wherein the secret key is loaded into a storage element by applying a one-way function on a seed.
